(19) Europäisches Patentamt

European Patent Office

Office européen des brevets

(11) **EP 1 534 639 B1**

(12) **EUROPEAN PATENT SPECIFICATION**

(45) Date of publication and mention
of the grant of the patent:
**02.08.2006 Bulletin 2006/31**

(51) Int Cl.:
***C03B 3/02*** *(2006.01)*     ***C03C 3/085*** *(2006.01)*

(21) Application number: **03791645.9**

(22) Date of filing: **05.08.2003**

(86) International application number:
**PCT/US2003/024478**

(87) International publication number:
**WO 2004/020351 (11.03.2004 Gazette 2004/11)**

(54) **PRODUCING GLASS USING OUTGASSED FRIT**

HERSTELLUNG VON GLAS UNTER VERWENDUNG VON AUSGEGASTER FRITTE

PRODUCTION DE VERRE AU MOYEN DE FRITTE DEGAZEE

(84) Designated Contracting States:
**DE FR GB NL**

(30) Priority: **29.08.2002 US 232257**

(43) Date of publication of application:
**01.06.2005 Bulletin 2005/22**

(73) Proprietor: **Corning Incorporated
Corning, NY 14831 (US)**

(72) Inventor: **MURNANE, Rand, A
Big Flats, NY 14814 (US)**

(74) Representative: **Marchant, James Ian et al
Elkington and Fife LLP,
Prospect House,
8 Pembroke Road
Sevenoaks,
Kent TN13 1XR (GB)**

(56) References cited:
**EP-A- 0 253 188        EP-A- 1 070 681
EP-A- 1 172 340        US-A- 3 109 045
US-A- 3 151 964        US-A- 3 929 440**

**Description**

FIELD OF THE INVENTION

The present invention relates to a process for producing glass materials. In particular, the present invention relates to a process for producing glass materials by using outgassing materials and non-outgassing materials under normal glass melting conditions. The process is useful, for example, in producing glass materials containing, *inter alia*, silica, alumina, alkaline and alkaline earth metal oxides and/or boron oxide in conventional glass furnaces.

BACKGROUND OF THE INVENTION

In typical conventional glass making processes, all raw materials are pretreated, mixed, optionally with water, to form a single melting batch, and then charged in installment or continuously into a premelter or a glass melting furnace, where the batch materials are subjected to heating and melting using fuel firing and/or electrical energy. A series of chemical reactions take place inside the premelter and/or furnace, whereby molten glass is formed. The molten glass is then allowed to exit the furnace and formed into glass sheets, tubes, fibers, containers, optical products, and the like, using various technique and equipment.

A common glass composition, especially a silicate glass composition, contains glass formers, stabilizers, fluxes, colorants, decolorants, fining agents, and the like. Glass formers are the indispensable oxides that form the structural network of glass, including $SiO_2$, $B_2O_3$, $P_2O_5$, $GeO_2$, $V_2O_5$ and $As_2O_3$, with $SiO_2$ being the most typical and most important. Fluxes are typically Group I alkaline oxides, the source materials of which in the batch tend to react at a relatively lower temperature in the furnace. Stabilizers are oxides that bring about high chemical resistance to the glass and control the working characteristics of the glass together with the fluxes in forming operations. Common stabilizers include alkaline earth metal oxides, PbO, ZnO and $Al_2O_3$. Various transitional metal oxides may be introduced into the glass composition as colorants. As decolorants, selenium, cobalt and arsenic may be used to impart colorless transparency to the glass. Fining agents are added to remove seeds in the glass. An exemplary soda-lime-silica glass composition contains approximately, in terms of weight percent, 70% $SiO_2$, 15% $Na_2O$ and $K_2O$, 10% CaO and MgO, and small amounts of other oxides, especially $Al_2O_3$. Glass materials in this type are widely used in containers, windows, drinking glasses, light bulbs and glass construction blocks. Borosilicate glasses have good chemical resistance and low thermal expansion and thus are widely used for cooking wares, fiberglass and laboratory wares. A typical composition of borosilicate glass has approximately, in terms of weight percent, 80% $SiO_2$, 12.9% $B_2O_3$, 3.8% $Na_2O$, 2.2% $Al_2O_3$ and 0.4% $K_2O$, commonly known as Pyrex. Aluminosilcate glass has relatively high percentage of $Al_2O_3$, and usually enjoys fairly low thermal expansion, high chemical resistance, high resistance to higher temperatures and good strength.

In the batch mixture, $SiO_2$ is usually in the form of rock crystal, silica sand, pure $SiO_2$, kaolin ($Al_2O_3 \cdot 2SiO_2 \cdot 2H_2O$) or feldspar ($R_2O \cdot Al_2O_3 \cdot 6SiO_2$). $B_2O_3$ is typically introduced in the form of boric acid ($H_3BO_3$), colemanite ($Ca_2B_6O_{11} \cdot 5H_2O$), borax ($Na_2B_4O_7 \cdot 10H_2O$), ulexite ($NaCaB_5O_9 \cdot 8H_2O$) or pure $B_2O_3$. $Na_2O$ usually takes the form of natural soda ash ($Na_2CO_3$); light soda ash ($Na_2CO_3$) and heavy soda ash ($Na_2CO_3 \cdot xH_2O$) synthesized, for example, by the Solvay process; sodium feldspar ($Na_2O \cdot Al_2O_3 \cdot 6SiO_2$) and nelpheline syenite ($Na_2O \cdot Al_2O_3 \cdot 2SiO_2$). $K_2O$ is typically introduced in the form of potash ($K_2CO_3$), saltpeter (potassium nitrate, $KNO_3$) and potassium feldspar ($K_2O \cdot Al_2O_3 \cdot 6SiO_2$). Spodumene ($Li_2O \cdot Al_2O_3 \cdot 2SiO_2$) and lithium carbonate ($Li_2CO_3$) are commonly used as the source of $Li_2O$. CaO is usually provided by limestone ($CaCO_3$), dolomite ($MgCO_3 \cdot CaCO_3$) or colemanite ($Ca_2B_6O_{11} \cdot 5H_2O$). MgO usually takes the form of magnesite ($MgCO_3$), dolomite ($MgCO_3 \cdot CaCO_3$) or basic $MgCO_3$($4MgCO_3 \cdot Mg(OH)_2 \cdot 4H_2O$). BaO is typically introduced in the form of $BaCO_3$ and $Ba(NO_3)_2$. $Al_2O_3$ usually takes the form of pure $Al_2O_3$, kaolin ($Al_2O_3 \cdot 2SiO_2 \cdot 2H_2O$), nepheline syenite ($Na_2O \cdot Al_2O_3 \cdot 2SiO_2$), feldspar ($R_2O \cdot Al_2O_3 \cdot 6SiO_2$), phonolite ($xR_2O \cdot yAl_2O_3 \cdot Fe_2O_3 \cdot zSiO_2$) or blast furnace slag ($SiO_2 \cdot Al_2O_3 \cdot CaO \cdot S^{2-}$). PbO may take the form of red lead ($Pb_3O_4$) or lead silicate ($PbO \cdot SiO_2$). Many of these batch materials are hydrates containing large quantities of chemically bound water, or are carbonates. These materials tend to dissociate and decompose at a relatively low temperature in the furnace and release large quantity of gas ($H_2O$ and $CO_2$). Nitrates and sulfates, if used in the batch, release gases during the glass melting process, too. In the conventional glass making process for typical TV panel glass, the volume of gas released in the furnace is approximately 1000 times the volume of the glass.

To reduce energy consumption of a glass making process, it is important to raise the glass production rate. The glass production rate, in turn, is largely dependent on the glass-melting rate in the furnace. Factors that determine glass melting rate include, *inter alia*, (i) heating capacity of the furnace; (ii) heat transfer efficiency of the batch and molten glass in the furnace; (iii) dissolution of refractory materials, such as sand, in the batch; (iv) removal of bubbles formed in the melting process; (v) homogenization of molten glass liquid; and (vi) thermal conditioning of glass to meet the requirements of the forming process. Forming a liquid phase during the glass melting process is of particular importance because the liquid mass transfer is much faster than solid state diffusion, promotes heat transfer and reaction with the solid particles in the batch. In a conventional fuel-fired glass-melting tank, the batch floats on top of the molten glass and heating is provided above the batch pile from the gas flame. The batch pile, colder than the molten glass and the flame, serves as a heat insulator, slowing melting of solid particles inside. When liquid is present, the gas released from the batch materials can form foam with the liquid, hindering heat transfer and reaction between the liquid and the solid particles. Components with higher melting temperature, such as silica and alumina, may combine with the foam to form a scum layer on top of the molten glass.

The scum layer is particularly undesirable in glass making. In addition to lower heat transfer and slow melting of refractory batch materials such as $Al_2O_3$ and $SiO_2$, it can adversely affect the glass quality. One of the objects of glass melting, whether in pots or in tanks, is to produce glass which is free from bubbles and crystalline particles and also homogeneous. Variations in composition produce differences in physical properties from point to point in the product of the melting operation and, because of the nature of viscous flow, these regions of non-uniform refractive index, viscosity, or thermal expansion are elongated into streaks which are called cords. Sometimes the streaks of off-composition glass are sharply distinguished from the normal glass and are termed sharp or wire cord. In other cases the change in properties from cord to normal glass is more gradual and we have smooth or wave cords. It is known that the main melt reactions in the glass furnace do not take place in parallel, but rather in series. This has actually been observed using cameras by the present inventor. Some batch components, such as limestone, tend to melt earlier than silica and alumina and sink into the tank to form globules, thus segregate from the unmelted floating $SiO_2$ and $Al_2O_3$ in the scum layer. This segregation leads to undesirable inhomogeneity of glass (cord). The unmelted $SiO_2$ and $Al_2O_3$ particles may even become enclosed in the final glass product. These compositional inhomogeneities are especially harmful for optical glasses and glasses used for applications that require high compositional uniformity, such as the liquid display device (LCD) substrates.

One solution traditionally used to increase the melting rate of glass, thus to reduce or eliminate the scum problem, is elevating the melting temperature by employing higher heating power. According to the following equation:

$$r = A \cdot e^{-\frac{Q}{RT}}$$

where ($A$) and ($Q$) are constants dependent on the furnace design, and R is a universal constant, the higher the melting temperature ($T$), the higher the glass melting rate ($r$). However, raising heating power typically translates into higher energy cost, and higher temperature facilitates refractory corrosion, shortens furnace operating life, promotes pollution and some defects in the glass product. Oftentimes, furnaces and tanks are built with a limited heating power and a maximum allowable operating temperature, rendering them incapable of melting glasses that require an even higher temperature to melt using the conventional melting process, such as glasses containing high percentage of $Al_2O_3$ and/or $SiO_2$. The cost of building a new furnace suitable for melting glass at such high temperature is usually very high. Alternative melter designs have been proposed in place of the conventional practice of floating a batch pile on a pool of molten glass. Literature disclosing special melter designs includes U.S. Pat. Nos. 296,227; 708,309; 2,593,197; 4,062; 667; 4,110,097 (using a ramp-like structure down which the liquid would flow into a melting tank); 1,889,509; 1,889,511; 2,006,947; 2,007,755; 4,061,487; 4,185,984 (using rotating vessels as the glass melting structure); and 1,082,195; 1,621,446; 3,109,045; 3,151,964; 3,328,149 and 3,689,679 (using a premelter where the glass is liquefied first before the melting tank. Unites States reissue patent No. 32,317 discloses a series of melter designs with special liquefaction chambers.

All these approaches hitherto used or proposed are thermal approaches, viz., they function by varying the thermal profile in the glass melter. These approaches invariably suffer from the downside of elevated melting temperature or complex and costly melter design. This has prompted the present inventor to look for an alternative process that can operate at the relatively low melting temperature of a conventional glass melter.

As part of the research effort, the present inventor observed the reactions taking place in a glass melter in a conventional glass melting process using a video camera. The observation revealed bubbling and foaming in wide temperature ranges, for example, 300-1500°C for bubbling, and 500-1400°C for foaming for some glass compositions. In light of this discovery, the present inventor contemplated the present inventive process of using outgassed frit in glass melting. Surprisingly, this modification of the conventional glass melting technique turns out to be an effective chemical approach to tackle with the above-mentioned inherent problems with the conventional thermal approaches.

## SUMMARY OF THE INVENTION

Accordingly, the present invention provides a process for producing glass materials using glass forming materials divided into two groups A and B, wherein Group A materials consist essentially of materials that outgas under glass-melting conditions and Group B materials consist essentially of materials that do not outgas under normal glass melting conditions, wherein the process comprises the following steps:

(I) producing a frit by (i) mixing the Group A materials; (ii) heating the resultant mixture of Group A materials to an outgassing temperature and allowing the materials to melt and outgas; and (iii) cooling the molten outgassed material and forming frits therefrom;

(II) mixing the frit produced in step (I) with other glass forming materials, collectively referred to as Group B materials; and

(III) melting the resultant mixture of step (II) under glass melting conditions to form the glass material.

Preferably, the Group A materials in their present inventive process consist essentially of materials selected from naturally occurring, synthetic and beneficiated naturally occurring nitrates, carbonates, carbohydrates, sulfates, boric acid, hydroxides, mixtures and compounds thereof, with or without containing additional chemically bound water, oxides and other materials that decompose to outgas under normal glass melting temperatures and other materials that contain chemically bound water. More preferably, the Group A materials in the present inventive process consist essentially of materials selected from naturally occurring, synthetic and purified nitrates, carbonates, carbohydrates, sulfates and hydroxides of alkali and alkali earth metals, boric acid, mixtures and compounds thereof, with or without containing additional chemically bound water. Preferably, oxides with melting temperatures lower than the glass melting temperature and their source materials are included in Group A, such as $B_2O_3$ and borates. Preferably, fining agents and other starting materials, when used in small amounts in the glass composition, are included in Group A for a more uniform distribution thereof in the final glass product.

Preferably, the Group A materials in step (I)(ii) are melted and allowed to outgas substantially completely. Preferably, the Group A materials in step (I)(ii) are melted and allowed to outgas at a temperature 400-500°C lower than the glass melting temperature in step (III).

Preferably, the Group B materials in the present inventive process consist essentially of materials selected from naturally occurring, synthetic and purified $Al_2O_3$, $SiO_2$, mixtures and salts containing them, and cullets.

The present inventive process can be used in any type of glass melter, including, but not limited to, pot furnaces, fuel-fired tank furnaces, electric boosted fuel-fired tank furnaces, and all-electric furnaces, on large industrial scale and small scale (hand-shop) alike. Preferably, the present inventive process is used in furnaces where foaming and scum forming are of particular concern, for example, conventional and modified fuel-fired tank furnaces and electric boosted fuel-fired tank furnaces.

The present inventive process can be used for producing various types of glasses, including, but not limited to, soda-lime glasses, boro-silicate glasses, alumino-boro-silicate glasses, lead glasses, and high silica glasses. Advantageously, the present inventive process can be used for producing glasses traditionally require a high melting temperature and/or glasses where outgassing is significant, for example, but not limited to, high silica glasses, and alumino-boro-silica glasses. The present inventive process can be advantageously used for producing high quality glasses that require a high degree of compositional and property homogeneity, for example, optical glasses and glasses for producing LCDs.

By preparing frits from the Group A materials and melting the frits together with the Group B materials, gas release is substantially reduced in the glass melter, hence foaming and scum forming. As a result, heat transfer in the glass melter is improved; the early-formed liquid has a more intimate interaction with the solid particles; and high melting temperature batch materials such as silica and alumina can melt more readily. All these technical advantages contribute to a lower melting temperature in the glass melter at a given glass-melting rate, and/or a higher melting rate for the same glass melter temperature. By reducing or eliminating the scum layer, higher quality glass can be produced in a conventional glass furnace. Moreover, melting high silica glasses and other glasses that traditionally require a high melting temperature can be thus realized in a typical conventional glass furnace at a relatively lower melting temperature.

Additional features and advantages of the invention will be set forth in the detailed description which follows, and in part will be readily apparent to those skilled in the art from the description or recognized by practicing the invention as described in the written description and claims hereof, as well as the appended drawings.

It is to be understood that the foregoing general description and the following detailed description are merely exemplary of the invention, and are intended to provide an overview or framework to understanding the nature and character of the invention as it is claimed.

The accompanying drawings are included to provide a further understanding of the invention, and are incorporated in and constitutes a part of this specification.

BRIEF DESCRIPTION OF THE DRAWINGS

In the accompanying drawings,

FIG. 1 is a schematic flow chart showing the conventional process of melting common soda-lime glasses in a cross-fire fuel-fired glass furnace;

FIG. 2 is a picture showing the cross-section of a glass sample melted by using the conventional batch melting process;

FIG. 3 is a picture showing the cross-section of a glass sample having the same projected composition as the sample in FIG. 2 but melted by using degassed frit in accordance with the process of the present invention.

## DETAILED DESCRIPTION OF THE INVENTION

As used herein in the present application, the following terms have the following meaning:

Group A materials denote the group of batch materials that consist essentially of those that generate gases (outgas) under normal glass forming conditions by decomposition or other chemical reactions. Gases released include, but are not limited to, $H_2O$, $CO_2$, $O_2$, $SO_3$ and $N_2$. For the purpose of the present application, the dissociation of chemically bound water in the batch materials is regarded as a chemical reaction. Thus, with certain exceptions described *infra*, batch materials containing chemically bound water are in this category. A great majority of gases are released by materials in this group in conventional glass making. Batch materials containing largely $SiO_2$ and/or $Al_2O_3$ are excluded from Group A.

Group B materials denote the group of batch materials that consist essentially of those that typically do not release gases by decomposition or other chemical reactions under normal glass forming conditions. Materials in this group may release physically bound gases, such as moisture and air in the batch. Generally, starting materials containing largely $SiO_2$ and/or $Al_2O_3$ are included in Group B, even if they contain chemically bound water.

Foam denotes the mixture generated during the course of glass melting in the glass melter that comprises largely liquid and gas.

Scum denotes the mixture generated during the course of glass melting in the glass melter that comprises liquid, gas and solid particles. Typically, the solid particles are high melting temperature materials, such as silica and alumina.

Normal glass melting temperature is the temperature at which the batch materials melt to form the molten glass in a glass melter in a glass melting process.

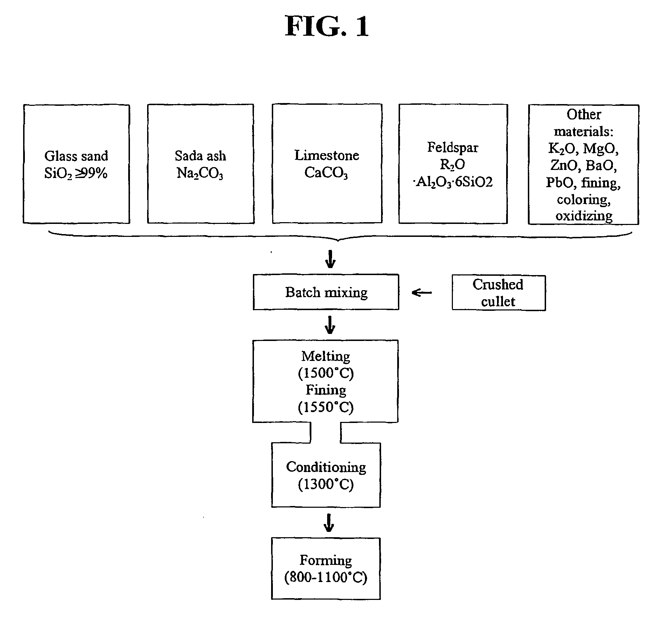

In typical conventional glass making, pretreated batch materials are mixed altogether and charged into the glass furnace where the batch materials are subjected to heating, melting and a series of complex chemical reactions to form the molten glass. FIG. 1 illustrates the conventional melting process for a typical soda-lime glass in a cross-fire fuel-fired glass furnace. As discussed *supra*, many of the batch materials release gases as a result of decomposition or other chemical reactions in the furnace during the glass melting process. The volume of gases generated during glass melting may be quite substantial compared to the glass volume in the making of glasses. Whilst the gases may be conducive to the mixing of the particles of the batch materials in the furnace during the course of glass melting, it causes a number of concerns, as discussed *supra*. First, the generated gases cause foaming together with the already liquefied batch materials. Second, the gases, together with the liquid and solid particles, may form a scum layer on top of the molten glass. Third, the generation of large volume of gases may go out of control in the furnace. The foam and scum layer have very low thermal conductivity and act as insulating media that prevent the heat of the flame from reaching the unmelted batch material trapped inside or located underneath. A bottleneck in conventional glass melting process is the dissolution of sand and/or other refractory materials such as $Al_2O_3$. The foam and scum layer increase the difficulty of the melting of these materials, thus decrease and hinder the overall glass production rate. The unmelted refractory particles in the scum layer can cause cord or become enclosed in the final glass product, leading to defective glass quality. This is particularly undesirable for glasses that require a high degree of homogeneity, such as the glass substrates for liquid crystal displays. For glasses that traditionally require a high melting temperature, such as high-silica glasses (for example, glasses containing 80% by mole and higher silica), the complete melting of silica may be an even more pronounced problem because of the low melting efficiency caused by the foam and scum layer. The present inventor has discovered that gas generation and foaming take place in wide temperature ranges in the glass furnace for some glass compositions. This indicates that the gas generation and foaming as a factor negatively affecting the glass melting rate exists during a large part of the glass melting process.

As discussed *supra*, it is known that raising melting temperature is often an approach adopted to counter the effect of the foam and scum layer so that the batch materials can melt completely in the furnace. Other thermal approaches in solving this problem include special furnace designs. Whereas these thermal approaches may work for the intended purposes, they are not without sacrifices and drawbacks. Elevated melting temperature expedites the dissolution of refractory bricks in the furnace, thus contaminating the glass and shortening the furnace life. High melting temperatures invariably render conventional furnaces not useable for many glasses. Building non-conventional glass furnaces is usually associated with high cost.

As discussed *supra*, the process of the present invention is a chemical approach in addressing the technical problem in conventional glass melting process. The underlying concept of the present inventive process is to reduce or eliminate gas generation during the glass melting process, thus reduce or eliminate the problem associated with gas generation, foaming and/or scum forming, which is prevalent in many conventional glass making processes and their thermally modified alternatives, such that a higher thermal efficiency and hence a lower melting temperature are achieved in the glass melting furnace. To that end, the same starting materials are used as in the conventional glass making, but the outgassing materials among them are pre-melted and allowed to outgas and formed into frits before they are mixed and melted with the remaining batch materials in the glass furnace.

For the convenience of the description of the process of the present invention, the batch materials are divided into two groups, Group A materials consisting essentially of those that generate gases (outgas) under normal glass melting conditions, and Group B materials consisting essentially of those that normally do not outgas under normal glass melting conditions. As used herein, the term "consisting essentially of" means that the materials in question may contain additional components other than those enumerated, for example, but not limited to, impurities, as long as the additional components do not materially alter the basic and novel feature of the present invention. All these materials may be pretreated before they are used for the present inventive process for producing glass materials. These pretreatment processes are those normally used in conventional glass melting processes, including, but not limited to, crushing, grinding, wet screening, drying, screening, magnetic screening, and further beneficiation such as acid treatment and floatation. The batch materials may be naturally occurring, synthesized or purified naturally occurring, and/or recycled. One of the advantages of the process of the present invention is that there are no special requirements as to the starting materials compared to the conventional glass making. Therefore, no additional cost in respect of starting materials is introduced in the present invention.

The first step of the present inventive process involves the preparation of frits from Group A batch materials. By definition, Group A materials consist essentially of those that outgas under the normal glass melting conditions. For most glasses, the gases generated by Group A materials constitute the majority of the gas released during a conventional glass making process. Typically, batch materials falling into this group include, but are not limited to, naturally occurring, synthetic and purified nitrates, carbonates, carbohydrates, borates, sulfates, boric acid, hydroxides, and mixtures and compounds thereof. These materials may further contain chemically bound water. Batch materials containing largely $SiO_2$ and/or $Al_2O_3$, such as kaolin ($Al_2O_3 \cdot 2SiO_2 \cdot 2H_2O$), even if they contain chemically bound water, are excluded from Group A. For example and for the purpose of illustration only, these materials may include, but are not limited to, naturally occurring, synthetic and purified $Pb_3O_4$, nitrates, carbonates, carbohydrates and hydroxides of alkali and alkali earth metals, Zn and Pb, boric acid, mixtures and compounds thereof, with or without containing additional chemically bound water. These are usually source materials of the fluxing agents and stabilizers in the final glass composition. Other materials containing chemically bound water are included in Group A as well, such as borates having chemically bound water. For example and for the purpose of illustration only, in the present application, water contained in $Na_2SO_4 \cdot 10H_2O$ is regarded as chemically bound water. Nitrates and $Pb_3O_4$ release gas in the glass melting process by redox reactions. $O_2$ may be generated from these two types of materials, and $N_2$ may be released from nitrates. The thermal decomposition of alkali carbonates results in $CO_2$ and alkali metal oxides, which, together with fluxing agents from other sources, attack and dissolve the high melting materials, such as $SiO_2$ and/or $Al_2O_3$ during the course of glass melting. $CO_2$ is generated via the reactions of carbonates and hydrocarbonates. $H_2O$ is released via the reactions of the hydroxides and boric acid and dissociation of chemically bound water in some crystalline salts and of course, from the moisture (physically bound water) in the starting materials. A non-limiting and non-exhausted list of materials that may be included in Group A contains the following or mixtures and/or complex salts thereof, in their naturally occurring, beneficiated naturally occurring and/or synthesized state, with or without additional chemically bound water: $Na_2CO_3$, $NaHCO_3$, $Na_2CO_3 \cdot xH_2O$, $NaOH$, $NaNO_3$, $K_2CO_3$, $KHCO_3$, $KOH$, $KNO_3$, $Li_2CO_3$, $LiHCO_3$, $LiOH$, $BeCO_3$, $Be(OH)_2$, $MgCO_3$, $Mg(OH)_2$, $CaCO_3$, $Ca(OH)_2$, $SrCO_3$, $Sr(NO_3)_2$, $Sr(OH)_2$, $BaCO_3$, $Ba(OH)_2$, $Ba(NO_3)_2$, boric acid ($B(OH)_3$), colemanite ($Ca_2B_6O_{11} \cdot 5H_2O$), borax ($Na_2B_4O_7 \cdot 10H_2O$), ulexite ($NaCaB_5O_9 \cdot 8H_2O$), dolomite ($MgCO_3 \cdot CaCO_3$), basic $MgCO_3$ ($4MgCO_3 \cdot Mg(OH)_2 \cdot 4H_2O$), $PbCO_3$, $Pb(OH)_2$, $Pb_3O_4$, $ZnCO_3$ and $Zn(OH)_2$.

Generally, those that outgas under normal glass melting conditions constitute a majority of the Group A materials. However, other starting materials in typical conventional glass making, such as fining agents, colorants and other glass modifiers, can be added into Group A as well, as long as the outgassing materials are included in Group A. These materials are usually added into the glass composition in small amounts. They usually each constitute, expressed in terms of mole percentage on an oxide basis, less than about 5%, preferably less than about 3%, more preferably less than about 1%, of the final glass composition. Some of these materials are preferred to be included in Group A in order to form frits. For the purpose of uniform distribution thereof in the final glass product, it is preferred to include all these and other low percentage components into Group A, especially where their homogeneous distribution in the final glass product is desired. As a general guideline, oxides having a melting temperature lower than the glass melting temperature and their source materials are included in Group A. For example, $B_2O_3$ and borates without chemically bound water, even though not outgassing under normal glass forming conditions, are included in Group A because of their relatively low melting temperatures. In melting certain glasses, high melting temperature alkaline earth oxides, such as BeO, MgO, SrO and BaO, are preferred to be included in Group A in order to form frits in step (I). Thus by way of example and for the purpose of illustration only, such fining agents and modifiers that can be added into Group A include: oxides and other materials containing $B_2O_3$, borates, PbO, $Pb_3O_4$, halides, MgO, SrO, ZnO, FeO, $Fe_2O_3$, $As_2O_5$, $Sb_2O_5$, $SnO_2$,

$TiO_2$, $ZrO_2$, $Y_2O_3$, $Er_2O_3$, $Ta_2O_5$, $CeO_2$, and other transitional metal and rare earth oxides and compounds. These materials may be added, totally or partially, into Group B, as long as a homogeneous distribution thereof, if desired, can be achieved in the final glass composition. In addition, in order to adjust the viscosity, water sensitivity and working properties of the frits prepared from Group A materials, it may be desirable to add some cullets into Group A as well.

One of ordinary skills in the art can determine the amount of the individual Group A material that should be used according to the projected composition of the final glass composition, and can make adjustments in accordance with the different starting materials and melting furnace requirements. These Group A materials, upon pretreatment mentioned above, are carefully weighed and mixed. The grain size and size distribution of these starting materials are not crucial to the present invention. Mixing can be carried out in any traditional mixer used in the glass making industry, including ribbon, pan, drum and cone type mixers. The commonly used Eirich mixer may be conveniently employed. The mixture of Group A materials is then subjected to heating and melting. This heating and melting step can be carried out in a conventional glass furnace, for example, but not limited to, a pot furnace or a cross-fire fuel-fired furnace. With the heating energy imposed, the mixture undergoes a series of chemical reactions and release gases. As can be expected, the main melt reactions do not take place in parallel, but rather in series. Gas may evolve starting from a relatively low temperature, for example, 200°C even before liquid is formed from the mixture. As the temperature rises, the outgassing continues as the mixture gradually liquefies. Finally, the whole mixture is melt at a certain temperature that depends on its composition. The molten mixture is allowed to stay around that temperature for a period of time, so that preferably the outgassing reactions undergo substantially completely and a fluid and quiescent liquid free of bubbles is obtained. The fluxing liquid produced from this reaction is very corrosive to conventional glass refractories. Special care needs to be taken not to contaminate the frit liquid from corrosion of these refractories. The melting temperature is typically 400-500°C below the glass melting temperature. For example, for a glass that is usually produced at a melting temperature of about 1400-1500°C, the melting temperature of the Group A materials is around 1000°C. The agitation caused by the considerable amount of gas released contributes to a homogeneous mixture of the Group A materials. Care should be exercised in this stage so that the outgassing will not be too violent and out of control. One of skills in the art can control the heating and melting process by adjusting the fire and/or electric power used.

As in typical glass melting processes, the melting of the Group A materials may be conducted in batches or continuously. Once the melting and outgassing is finished, the molten mixture exits the melting furnace and is allowed to cool. The cooled mixture is a glass-like or crystalline material containing largely oxides derived from the Group A batch materials charged into the melting furnace. Cooling this mixture quickly, directly from the melting furnace creates a high thermal stress in the material, which often breaks the material into small pieces. The small pieces can then be fed into a ball mill or other equipment to make frits of the desired grain size. Depending on the viscosity of the material and its sensitivity to water, it may be subjected to dry gauging (water quenching) or cooling between water-cooled rollers. In the preparation of some glasses, it is desirable to finely pulverize the molten material, so that a homogeneous mixture of the frit and the non-outgassing Group B materials can be achieved.

The next step of the process of the present invention is mixing the frits of Group A materials prepared as described above with the rest of the batch materials, namely, the Group B materials, for the glass composition. Generally, the Group B batch materials do not outgas under normal glass melting conditions, viz., they do not contain chemical moieties that tend to release gas by thermal decomposition or other chemical reactions under normal glass melting conditions, with certain exceptions, such as kaolin ($Al_2O_3 \cdot 2SiO_2 \cdot 2H_2O$). As a rule of thumb, materials containing large amounts of $SiO_2$ and/or $Al_2O_3$ are included in Group B. Falling into this group are usually naturally occurring, synthetic and purified $Al_2O_3$, $SiO_2$, mixtures and salts containing them, and cullets. Thus, by way of example and for the illustration purpose only, the Group B batch materials typically include, in addition to cullets, but are not limited to, sand (containing mostly $SiO_2$), pure silica, pure alumina, feldspar ($R_2O \cdot AlO_2O_3 \cdot 6SiO_2$, including sodium feldspar $Na_2O \cdot Al_2O_3 \cdot 6SiO_2$ and potassium feldspar $K_2O \cdot Al_2O_3 \cdot 6SiO_2$), nepheline syenite ($Na_2O \cdot Al_2O_3 \cdot 2SiO_2$), spodumene ($Li_2O \cdot Al_2O_3 \cdot 2SiO_2$), phonolite ($xR_2O \cdot yAl_2O_3 \cdot Fe_2O_3 \cdot zSiO_2$), blast furnace slag ($SiO_2 \cdot Al_2O_3 \cdot CaO \cdot S^2$), lead silicate ($PbO\text{-}SiO_2$), kaolin ($Al_2O_3 \cdot 2SiO_2 \cdot 2H_2O$), and the like. Using cullets in the batch materials have been widespread in glass making. Depending on the glass composition and the end use of the glass, foreign and/or domestic cullets may be employed. Cullets have the advantages of having no reaction and dissociation heat during glass melting, promoting better heat transfer in batch blanket and liquid phase formation at low temperature, reducing stack emissions and being capable of being preheated before being charged into the furnace.

Likewise, the mixing of the frits of Group A materials prepared.as mentioned above and the Group B batch materials can be conducted in any type of mixer that is conventionally used in glass making industry, including, but not limited to, ribbon, pan, drum and cone type mixers. The commonly used Eirich mixer may be conveniently employed. The mixture is then charged into a glass furnace where it is melted, fined and formed into the glass material in a manner similar to the conventional glass making process.

Any type of furnace can be employed in melting the mixture of the frits and the Group B batch materials in the present inventive process. Pot furnace, fuel-fired tank furnace, electric boosted fuel-fired tank furnace and all-electric tank furnaces of various sizes can be chosen by one of skills according to the production rate, glass quality and other considerations. As can be expected, there is still gas generation during the course of this glass melting process, because (i) there is always physically bound and/or entrapped gas in the frits and the Group B materials; (ii) there may be gas released from the chemical reactions between the frits of Group A materials and the Group B materials; and (iii) some Group B materials may contain small amounts of chemically bound water, such as kaolin ($Al_2O_3 \cdot 2 \cdot SiO_2 \cdot 2H_2O$). For various purposes, small amount of water may be added to the batch to facilitate the melting process as in the conventional glass melting process. Moreover, during the glass fining stage, gas generation is necessary in order to remove the seeds in the final glass products. However, in any furnace, the mixture generates much less gas than in the conventional glass making method because the frits are already outgased, and foaming and scum forming is reduced or eliminated. This feature renders the present inventive process particularly suitable and advantageous for the fuel-fired and electric boosted fuel-fired furnaces, where overhead flame is used to melt the batch materials. As a result of the reduced foam and scum, efficiency of heat transfer, especially from the top, is improved, and a more intimate interaction between the early formed liquid and refractory particles, such as silica and alumina, is achieved, leading to more expeditious dissolution of them. The overall effect is a lower furnace temperature for melting the glass.

Lower temperature slows the dissolution and etching of the refractory bricks of the furnace. Lower temperature also means less electric consumption for electric boosted fuel-fired furnaces and all-electric furnaces, which, in turn, extends the lives of the electrodes and the furnace.

By way of example and for the purpose of illustration only, a soda-lime-silica glass containing, by weight, about 70% $SiO_2$, 15% $Na_2O$ and $K_2O$, 10% of CaO and MgO, and small amounts of other oxides, can be prepared using $Na_2CO_3$, $K_2CO_3$, $CaCO_3$, $MgCO_3$, and the like, $SiO_2$, $Al_2O_3$ and cullets as the batch materials according to the process of the present invention. As such, the carbonates are first melted, optionally with a certain amount of cullets and other materials in a glass furnace and formed into frits. The thus prepared frits are mixed with $SiO_2$ and $Al_2O_3$ and optionally cullets, then charged into a cross-fired glass furnace and melted to produce the glass. A borosilicate glass (pyrex) containing by weight approximately 80% $SiO_2$, 12.9% $B_2O_3$, 3.8% $Na_2O$, 2.2% $Al_2O_3$ and 0.4% $K_2O$ may be produced in a similar fashion starting from $B(OH)_3$, $Na_2CO_3$, $Al_2O_3$ and $K_2CO_3$, where calculated amounts of $B(OH)_3$, $Na_2CO_3$ and $K_2CO_3$ as the Group A materials are first melted and formed into frits, and then mixed with $SiO_2$, $Al_2O_3$ and melted in a glass furnace to produce the glass. For a lead glass containing by weight of about 60.8% $SiO_2$, 22.8% PbO, 10.2 $Na_2O$, 1.1% $K_2O$, 3.0% $Al_2O_3$ and 2.1% miscellaneous materials, it may be produced by mixing calculated amount of $Na_2CO_3$, $K_2CO_3$ and $Pb_3O_4$, melting them and forming them into frits, followed by combining them with $SiO_2$, $PbO \cdot SiO_2$, $Al_2O_3$ and miscellaneous materials and melting in a conventional fuel-fired glass furnace to produce the glass. For high silica glasses containing 80% by mole or higher of silica, they can be produced by mixing and melting the fluxing agents and preparing them into frits, mixing the fluxing frits with the silica batch material, followed by melting in a conventional electric-boosted cross-fire glass furnace.

Glasses for LCD substrates are typically hard to melt by using the conventional glass making process. An exemplary LCD glass substrate contains, in weigh percent on an oxide basis, of 40-57% $SiO_2$, 2.0-11% $Al_2O_3$, 1-16% CaO, 8-21.5% SrO, 14-31.5% BaO, 0-3% MgO, 0-4% $B_2O_3$ and miscellaneous small amounts of other oxides. The furnace temperature for producing a glass composition in this category can reach as high as 1650°C using the conventional all-batch-materials-together method. Because of the relatively high percentages of $SiO_2$ and $Al_2O_3$, which are refractory materials, foam and particularly scum forming are quite pronounced. Using the process of the present invention, calculated amounts of Group A materials including $B(OH)_3$, $CaCO_3$, $MgCO_3$, $SrCO_3$, $B_2O_3$, CaO, MgO, SrO, $Sr(NO_3)_2$, $BaCO_3$ and $Ba(NO_3)_2$ are mixed and melted to form frits, which is subsequently mixed with the Group B materials, namely, $SiO_2$ and $Al_2O_3$, melted and formed into the glass by, for example, fusion draw process. The present invention has been proved successful in reducing scum for this type of glass composition.

The present invention is further illustrated by the following examples, which are meant to be illustrative, and not in any way limiting, to the claimed invention.

EXAMPLES

A series of glass compositions were melted using (i) the conventional melting process where all batch materials are melted together and (ii) the melting process of the present invention. The glasses involved in the following examples have either (a) compositions consisting essentially, expressed in mole percent on an oxide basis, of:

| | | | |
|---|---|---|---|
| $SiO_2$ | 64-70 | MgO | 0-5 |
| $Al_2O_3$ | 9.5-14 | CaO | 3-13 |
| $B_2O_3$ | 5-10 | SrO | 0-5.5 |
| $TiO_2$ | 0-5 | BaO | 2-7 |
| $Ta_2O_5$ | 0-5 | MgO+CaG+SrO+BaO | 10-20 |

or (b) compositions consisting essentially, expressed in mole percent on an oxide basis, of:

| | | | |
|---|---|---|---|
| $SiO_2$ | 65-75 | MgO | 0-3 |
| $Al_2O_3$ | 7-13 | CaO | 0-5 |
| $B_2O_3$ | 5-15 | SrO | 0-5 |

and essentially free of BaO.

In the examples, all starting materials, if used, were $SiO_2$, $Al_2O_3$, $MgCO_3$, $CaCO_3$, $BaCO_3$, $Ba(NO_3)_2$, $SrCO_3$, $Sr(NO_3)_2$, MgO, SrO, $B_2O_3$ and/or $B(OH)_3$. Fining agents, such as $As_2O_5$ and $Sb_2O_5$ were used in very small amounts. Amounts of the starting materials used were calculated according to the respective projected final glass composition. Thus, for the purpose of the present application, Group A materials for these glasses included $Ba(NO_3)_2$, MgO, SrO, $B(OH)_3$, $B_2O_3$, if any, and the carbonates. Fining agents were added to the Group A materials for a more uniform distribution thereof in the final glass. Group B materials include $SiO_2$ and $Al_2O_3$.

The melting, including the pre-melting of Group A materials to prepare the frits and the preparation of glass, either by the conventional process or by the present inventive process of melting Group A material frits and Group B materials, were conducted both in platinum crucibles in a laboratory. It is to be understood that the present inventive process for producing glass compositions can be used on large industrial scale as well.

Various examination and observation means were used to study the melting process. Video camera was used to observe the melting processes. At certain desired point of the melting process, heating is stopped, the batch is cooled down immediately and cold autopsy of the solidified sample is performed. Microscopes were used to study the gaseous, solid and liquid inclusions in the sample.

EXAMPLE 1 (Comparative Example)

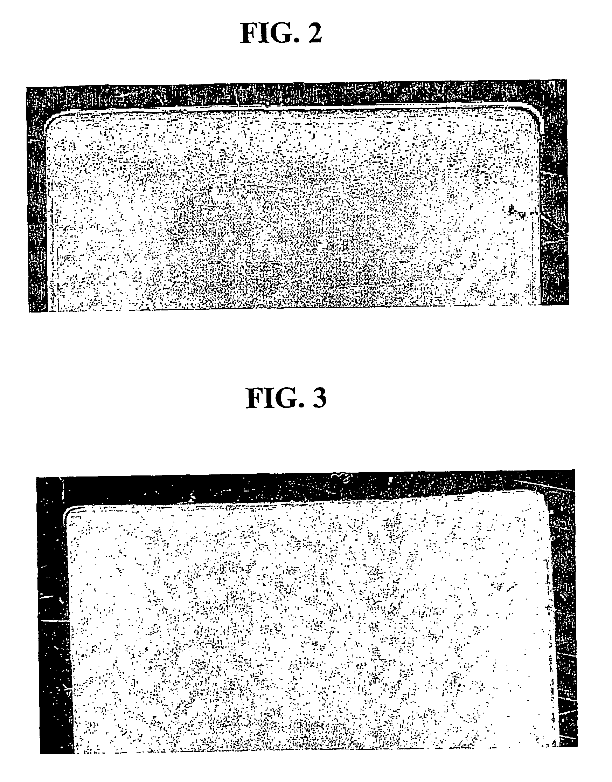

In this example, the conventional melting process was used. Thus starting materials of calculated amount were tumble mixed, charged into the furnace, heated to about 1600°C and melted. Substantial outgassing was observed during a wide temperature range from 200-1500°C. At a temperature between 500-600°C foam began to form. Scum of solid particles, foam and gas bubbles were observed in the temperature range of about 1100-1400°C. FIG. 2 is a picture of the cross-section of a sample A that was immediately cooled after 40 minutes at 1600°C during the course of melting. It is clear from this picture that there was a large number of gas voids and a thick layer of scum including gas pockets, solid particles and liquid on top of the molten glass. The white material on the top as shown in this figure was unmelted silica and alumina along with molten glass.

EXAMPLE 2 (the Present Invention)

In this example, the present invention method was used. The Group A materials mentioned above in calculated amounts were tumble mixed and charged into the melter. The mixture was heated to about 1100°C where it melted to form a very fluid liquid. Then it was maintained at that temperature for about 1-2 hours until its outgassing was substantially complete and a quiescent, bubble-free liquid was obtained. Then the molten material was allowed to cool, and frits of the size around 80-mesh were prepared therefrom. The frits appeared to be crystalline and multiphase. Afterwards, the frits were mixed intimately with the Group B materials. The resultant mixture was charged into the melter, heated and melted. Compared to the conventional process, outgassing during melting was dramatically reduced. The glass composition corresponding to sample *A* in Example 1 was melted using the process of the present invention as well, and the molten glass sample was nominated as sample *B*. Sample *B* was immediately cooled after 40 minutes at 1600°C during the melting process, which was substantially the same stopping point for sample *A* in Example 1. The cross-section of sample *B* was shown in FIG. 3. A comparison of FIG. 3 to FIG. 2 shows that sample *B* had much less, if any, scum on top of the molten glass. Gas void fraction was clearly reduced. Microscopic analyses showed the silica grains to be in a later stage of dissolution than those in the conventional batch pile as shown in FIG. 2. Clearly the process of the present invention worked to reduce scum forming during the glass melting process.

It will be apparent to those skilled in the art that various modifications and alterations can be made to the present invention without departing from the scope and spirit of the invention. Thus, it is intended that the present invention cover the modifications and variations of this invention provided they come within the scope of the appended claims and their equivalents.

**Claims**

1. A process for producing glass material using glass forming materials divided into two groups A and B, wherein Group A materials consist essentially of materials that outgas under glass-melting conditions and Group B materials consist essentially of materials that do not outgas under normal glass melting conditions, wherein the process comprises the following steps:

(I) producing a frit by (i) mixing the Group A materials; (ii) heating the resultant mixture of Group A materials to an outgassing temperature and allowing the materials to melt and outgas; and (iii) cooling the molten outgassed material and forming frits therefrom;
(II) mixing the frit produced in step (I) with other glass forming materials, collectively referred to as Group B materials; and
(III) melting the resultant mixture of step (II) under glass melting conditions to form the glass material.

2. A process in accordance with claim 1, wherein the melting temperature of Group A materials in step (I) is about 400-500°C lower than the glass melting temperature in step (III).

3. A process in accordance with claim 1 or claim 2, wherein the Group A materials consist essentially of those selected from naturally occurring, synthetic and beneficiated naturally occurring borates, nitrates, carbonates, carbohydrates, sulfates and hydroxides of alkali and alkali earth metals, $B_2O_3$, boric acid, mixtures and compounds thereof, with or without containing additional chemically bound water.

4. A process in accordance with any one of the preceding claims, wherein the Group A materials consist essentially of those selected from the group consisting of $Na_2CO_3$, $NaHCO_3$, $Na_2CO_3 \cdot xH_2O$, $NaOH$, $NaNO_3$, $Na_2SO_4$, $K_2CO_3$, $KHCO_3$, $KOH$, $KNO_3$, $K_2SO_4$, $Li_2CO_3$, $LiHCO_3$, $LiOH$, $LiNO_3$, $BeCO_3$, $Be(OH)_2$, $MgCO_3$, $Mg(OH)_2$, $CaCO_3$, $Ca(OH)_2$, $SrCO_3$, $Sr(NO_3)_2$, $Sr(OH)_2$, $BaCO_3$, $Ba(NO_3)_2$, $Ba(OH)_2$, boric acid ($B(OH)_3$), $B_2O_3$, colemanite ($Ca_2B_6O_{11} \cdot 5H_2O$), borax ($Na_2B_4O_7 \cdot 10H_2O$), ulexite ($NaCaB_5O_9 \cdot 8H_2O$), dolomite ($MgCO_3 \cdot CaCO_3$), basic $MgCO_3$ ($4MgCO_3 \cdot Mg(OH)_2 \cdot 4H_2O$), $PbCO_3$, $Pb(OH)_2$, $Pb_3O_4$, $ZnCO_3$ and $Zn(OH)_2$, with or without additional chemically bound water.

5. A process in accordance with claim 3, wherein the Group A materials further comprise fining agents and non-outgassing materials under normal glass melting temperatures, in amounts that each constitutes less than about 5%, preferably less than 3%, more preferably less than 1%, by mole on an oxide basis of the final glass composition.

6. A process in accordance with claim 5, wherein the non-outgassing materials comprise colorants, glass modifiers, and cullets.

7. A process in accordance with claim 1, wherein the. Group B materials consist essentially of materials selected from naturally occurring, synthetic and purified $Al_2O_3$, $SiO_2$, mixtures and salts containing them, and cullets.

8. A process in accordance with claim 1, wherein the Group B materials consist essentially of those selected from sand (containing mostly $SiO_2$), feldspars ($R_2O \cdot Al_2O_3 \cdot 6SiO_2$, including sodium feldspar $Na_2O \cdot Al_2O_3 \cdot 6SiO_2$ and potassium feldspar $K_2O \cdot Al_2O_3 \cdot 6SiO_2$), nepheline syenite ($Na_2O \cdot Al_2O_3 \cdot 2SiO_2$), spodumene ($Li_2O \cdot Al_2O_3 \cdot 2SiO_2$), phonolite ($xR_2O \cdot yAl_2O_3 \cdot Fe_2O_3 \cdot zSiO_2$), blast furnace slag ($SiO_2 \cdot Al_2O_3 \cdot CaO \cdot S^{2-}$), lead silicate ($PbO \cdot SiO_2$), $Al_2O_3$ and kaolin ($Al_2O_3 \cdot 2SiO_2 \cdot 2H_2O$).

9. A process in accordance with claim 1, wherein the Group A materials consist essentially of $B(OH)_3$, $B_2O_3$, $MgCO_3$, $MgO$, $CaCO_3$, $SrCO_3$, $SrO$, $Sr(NO_3)_2$, $BaCO_3$, $Ba(NO_3)_2$, $TiO_2$, $Ta_2O_5$ and $Y_2O_3$, Group B materials consist essentially of $SiO_2$, $Al_2O_3$, and the amount of the starting materials used are such that the glass formed therefrom has a composition consisting essentially, expressed in terms of mole percent on an oxide basis, of

| | | | | |
|---|---|---|---|---|
| $SiO_2$ | 64-70 | MgO | | 0-5 |
| $Al_2O_3$ | 9.5-14 | CaO | | 3-13 |
| $B_2O_3$ | 5-10 | SrO | | 0-5.5 |
| $TiO_2$ | 0-5 | BaO | | 2-7 |
| $Ta_3O_5$ | 0-5 | MgO+CaO+SrO+BaO | | 10-20 |

10. A process in accordance with claim 1, wherein the Group A materials consist essentially of B(OH)$_3$, B$_2$O$_3$, MgCO$_3$, MgO, CaCO$_3$, SrO, SrCO$_3$ and/or Sr(NO$_3$)$_2$, Group B materials consist essentially of SiO$_2$ and Al$_2$O$_3$, and the amount of the starting materials used are such that the glass formed therefrom has a composition consisting essentially, expressed in terms of mole percent on an oxide basis, of

| SiO$_2$ | 65-75 | MgO | 0-3 |
|---|---|---|---|
| Al$_2$O$_3$ | 7-13 | CaO | 0-5 |
| B$_2$O$_3$ | 5-15 | SrO | 0-5 |

and essentially free of BaO.

11. A process in accordance with claim 9 or claim 10, wherein in step (I), the mixture of Group A materials are heated to and kept at about 1100-1200°C for about 1-2 hours in step (ii) and allowed to outgas substantially completely.

12. A process in accordance with claim 1, wherein silica is used as a starting material in Group B, and it constitutes equal to or greater than 75%, preferably equal to or greater than 80%, by mole of the glass composition obtained.

**Patentansprüche**

1. Verfahren zur Herstellung von Glasmaterial unter Verwendung von glasbildenden Materialien, die in zwei Gruppen A und B unterteilt werden, wobei Materialien der Gruppe A im wesentlichen aus Materialien bestehen, die unter Glasschmelzbedingungen entgasen bzw. ausgasen, und Materialien der Gruppe B im wesentlichen aus Materialien bestehen, die unter normalen Glasschmelzbedingungen nicht entgasen bzw. ausgasen, wobei das Verfahren die folgenden Schritte umfasst:

(I) Herstellen einer Fritte durch (i) Vermischen der Materialien der Gruppe A; (ii) Erhitzen der resultierenden Mischung der Materialien der Gruppe A auf eine Entgasungstemperatur, und den Materialien ermöglichen, zu schmelzen und zu entgasen; und (iii) Abkühlen des geschmolzenen, entgasten Materials und Ausbilden von Fritten daraus;
(II) Vermischen der Fritten, die in Schritt (I) hergestellt wurden, mit anderen glasbildenden Materialien, die gemeinsam als Materialien der Gruppe B bezeichnet werden; und
(III) Schmelzen der resultierenden Mischung aus Schritt (II) unter Glasschmelzbedingungen, um das Glasmaterial auszubilden.

2. Verfahren gemäß Anspruch 1, wobei die Schmelztemperatur der Materialien der Gruppe A in Schritt (I) ungefähr 400-500°C unterhalb der Glasschmelztemperatur in Schritt (III) liegt.

3. Verfahren gemäß Anspruch 1 oder Anspruch 2, wobei die Materialien der Gruppe A im wesentlichen aus denen bestehen, ausgewählt aus natürlich vorkommenden, synthetischen und angereicherten, natürlich vorkommenden Boraten, Nitraten, Carbonaten, Kohlenhydraten, Sulfaten und Hydroxiden von Alkali- und Erdalkalimetallen, B$_2$O$_3$, Borsäure, Mischungen und Verbindungen davon, mit oder ohne zusätzlich chemisch gebundenem Wasser.

4. Verfahren gemäß einem der vorhergehenden Ansprüche, wobei die Materialien der Gruppe A im wesentlichen aus denen bestehen, ausgewählt aus der Gruppe, bestehend aus Na$_2$CO$_3$, NaHCO$_3$, Na$_2$CO$_3$·xH$_2$O, NaOH, NaNO$_3$, Na$_2$SO$_4$, K$_2$CO$_3$, KHCO$_3$, KOH, KNO$_3$, K$_2$SO$_4$, Li$_2$CO$_3$, LiHCO$_3$, LiOH, LiNO$_3$, BeCO$_3$, Be(OH)$_2$, MgCO$_3$, Mg(OH)$_2$, CaCO$_3$, Ca(OH)$_2$, SrCO$_3$, Sr(NO$_3$)$_2$, Sr(OH)$_2$, BaCO$_3$, Ba(NO$_3$)$_2$, Ba(OH)$_2$, Borsäure (B(OH)$_3$), B$_2$O$_3$, Colemanit (Ca$_2$B$_6$O$_{11}$·5H$_2$O), Borax (Na$_2$B$_4$O$_7$·10H$_2$O), Ulexit (NaCaB$_5$O$_9$·8H$_2$O), Dolomit (MgCO$_3$·CaCO$_3$), basisches MgCO$_3$ (4MgCO$_3$·Mg(OH)$_2$·4H$_2$O), PbCO$_3$, Pb(OH)$_2$, Pb$_3$O$_4$, ZnCO$_3$ und Zn(OH)$_2$, mit oder ohne zusätzlich chemisch gebundenem Wasser.

5. Verfahren gemäß Anspruch 3, wobei die Materialien der Gruppe A zusätzlich Läuterungsmittel und unter normalen Glasschmelzbedingungen nicht entgasende Materialien in Mengen enthalten, die jeweils weniger als 5 Mol.-%, bevorzugt weniger als 3 Mol.-%, bevorzugter weniger als 1 Mol.% auf einer Oxidbasis der endgültigen Glaszusammensetzung beitragen.

6. Verfahren gemäß Anspruch 5, wobei die nichtausgasenden Materialien Färbemittel, Glasmodifikatoren und Glasbruch umfassen.

7. Verfahren gemäß Anspruch 1, wobei die Materialien der Gruppe B im wesentlichen aus Materialien bestehen, ausgewählt aus natürlich vorkommendem, synthetischen und gereinigten $Al_2O_3$, $SiO_2$, Mischungen und Salze, die diese enthalten, und Glasbruch.

8. Verfahren gemäß Anspruch 1, wobei die Materialien der Gruppe B im wesentlichen aus denen bestehen, ausgewählt aus Sand (der überwiegend $SiO_2$ enthält), Feldspat ($R_2O \cdot Al_2O_3 \cdot 6SiO_2$, einschließlich Natriumfeldspat $Na_2O \cdot Al_2O_3 \cdot 6SiO_2$ und Kaliumfeldspat $K_2O \cdot Al_2O_3 \cdot 6SiO_2$), Nephelin-Syenit ($Na_2O \cdot Al_2O_3 \cdot 2SiO_2$), Spodumen ($Li_2O \cdot Al_2O_3 \cdot 2SiO_2$), Phonolith ($xR_2O \cdot yAl_2O_3 \cdot Fe_2O_3 \cdot zSiO_2$), Hochofenschlacke ($SiO_2 \cdot Al_2O_3 \cdot CaO \cdot S^{2-}$), Bleisilikat ($PbO \cdot SiO_2$), $Al_2O_3$ und Kaolin ($Al_2O_3 \cdot 2SiO_2 \cdot 2H_2O$).

9. Verfahren gemäß Anspruch 1, wobei die Materialien der Gruppe A im wesentlichen bestehen aus $B(OH)_3$, $B_2O_3$, $MgCO_3$, MgO, $CaCO_3$, $SrCO_3$, SrO, $Sr(NO_3)_2$, $BaCO_3$, $Ba(NO_3)_{2v}$, $TiO_2$, $Ta_2O_5$ und $Y_2O_3$, die Materialien der Gruppe B im wesentlichen bestehen aus $SiO_2$, $Al_2O_3$ und die Menge der verwendeten Ausgangsmaterialien so ist, dass das daraus hergestellte Glas eine Zusammensetzung besitzt, die im wesentlichen, ausgedrückt in Mol.-% auf einer Oxidbasis, besteht aus

| | | | |
|---|---|---|---|
| $SiO_2$ | 64-70 | MgO | 0-5 |
| $Al_2O_3$ | 9,5-14 | CaO | 3-13 |
| $B_2O_3$ | 5-10 | SrO | 0-5,5 |
| $TiO_2$ | 0-5 | BaO | 2-7 |
| $Ta_2O_5$ | 0-5 | MgO+CaO+SrO+BaO | 10-20 |

10. Verfahren gemäß Anspruch 1, wobei die Materialien der Gruppe A im wesentlichen bestehen aus $B(OH)_3$, $B_2O_3$, $MgCO_3$, MgO, $CaCO_3$, SrO, $SrCO_3$ und/oder $Sr(NO_3)_2$, die Materialien der Gruppe B im wesentlichen bestehen aus $SiO_2$ und $Al_2O_3$, und die Menge der verwendeten Ausgangsmaterialien so ist, dass das daraus hergestellte Glas eine Zusammensetzung besitzt, die im wesentlichen, ausgedrückt in Mol.-% auf einer Oxidbasis, besteht aus

| | | | |
|---|---|---|---|
| $SiO_2$ | 65-75 | MgO | 0-3 |
| $Al_2O_3$ | 7-13 | CaO | 0-5 |
| $B_2O_3$ | 5-15 | SrO | 0-5 |

und im wesentlichen frei von BaO ist.

11. Verfahren gemäß Anspruch 9 oder 10, wobei in Schritt (I) die Mischung der Materialien der Gruppe A auf ungefähr 1100-1200°C erhitzt und bei dieser Temperatur in Schritt (ii) für ungefähr 1-2 Stunden gehalten und ihr erlaubt wird, im wesentlichen vollständig zu entgasen.

12. Verfahren gemäß Anspruch 1, wobei Siliziumoxid als ein Ausgangsmaterial in Gruppe B verwendet wird, und es gleich oder mehr als 75 Mol.-%, bevorzugt gleich oder mehr als 80 Mol.-% der erhaltenen Glaszusammensetzung ausmacht.

**Revendications**

1. Un procédé pour produire une matière à base de verre en utilisant des matières vitrogènes divisées en deux groupes A et B, les matières du Groupe A consistant essentiellement en des matières qui dégagent des gaz dans les conditions de fusion du verre et les matières du Groupe B consistant essentiellement en des matières qui ne dégagent pas de gaz dans des conditions normales de fusion du verre, le procédé comprenant les opérations suivantes consistant :

(I) à produire une fritte (i) en mélangeant les matières du Groupe A ; (ii) en chauffant le mélange résultant de matières du Groupe A à une température de dégagement de gaz et en laissant les matières fondre et se dégazer ; et (iii) en refroidissant la matière dégazée et fondue et en formant des frittes à partir de celle-ci ;

(II) à mélanger la fritte produite dans l'opération (I) avec d'autres matières vitrogènes, collectivement dénommées matières du Groupe B ; et

(III) à fondre le mélange résultant de l'opération (II) dans des conditions de fusion de verre pour former la matière à base de verre.

**2.** Un procédé selon la revendication 1, dans lequel la température de fusion des matières du Groupe A à l'opération (I) est inférieure d'environ 400 à 500 °C à la température de fusion du verre à l'opération (III).

**3.** Un procédé selon la revendication 1 ou la revendication 2, dans lequel les matières du Groupe A sont essentiellement constituées par celles choisies, sous forme naturelle, synthétique ou naturelle enrichie, parmi les borates, les nitrates, les carbonates, les hydrocarbonates, les sulfates et les hydroxydes de métaux alcalins et de métaux alcalino-terreux, $B_2O_3$, l'acide borique, leurs mélanges et composés, contenant ou non de l'eau liée chimiquement additionnelle.

**4.** Un procédé selon l'une quelconque des revendications précédentes, dans lequel les matières du Groupe A sont essentiellement constituées par celles choisies dans le groupe formé par $Na_2CO_3$, $NaHCO_3$, $Na_2CO_3 \cdot xH_2O$, $NaOH$, $NaNO_3$, $Na_2SO_4$, $K_2CO_3$, $KHCO_3$, $KOH$, $KNO_3$, $K_2SO_4$, $Li_2CO_3$, $LiHCO_3$, $LiOH$, $LiNO_3$, $BeCO_3$, $Be(OH)_2$, $MgCO_3$, $Mg(OH)_2$, $CaCO_3$, $Ca(OH)_2$, $SrCO_3$, $Sr(NO_3)_2$, $Sr(OH)_2$, $BaCO_3$, $Ba(NO_3)_2$, $Ba(OH)_2$, l'acide borique ($B(OH)_3$), $B_2O_3$, la colemanite ($Ca_2B_6O_{11} \cdot 5H_2O$), le borax ($Na_2B_4O_7 \cdot 10H_2O$), l'ulexite ($NaCaB_5O_9 \cdot 8H_2O$), la dolomie ($MgCO_3 \cdot CaCO_3$), le carbonate de magnésium basique ($4MgCO_3 \cdot Mg(OH)_2 \cdot 4H_2O$), $PbCO_3$, $Pb(OH)_2$, $Pb_3O_4$, $ZnCO_3$ et $Zn(OH)_2$, avec ou dans eau liée chimiquement additionnelle.

**5.** Un procédé selon la revendication 3, dans lequel les matières du Groupe A comprennent en outre des agents d'affinage et des matières ne dégageant pas de gaz aux températures de fusion de verre normales, en des quantités représentant chacune moins d'environ 5%, de préférence moins de 3%, et plus avantageusement encore moins de 1 %, en pourcentages molaires sur la base des oxydes de la composition finale.

**6.** Un procédé selon la revendication 5, dans lequel les matières ne dégageant pas de gaz comprennent des colorants, des agents modifiants de verre et des déchets de verre.

**7.** Un procédé selon la revendication 1, dans lequel les matières du Groupe B sont essentiellement constituées par les alumines $Al_2O_3$ et silices $SiO_2$ naturelles, synthétiques ou purifiées, leurs mélanges et les sels les renfermant, et les déchets de verre.

**8.** Un procédé selon la revendication 1, dans lequel les matières du Groupe B sont essentiellement constituées par celles choisies parmi le sable (renfermant principalement de la silice $SiO_2$), les feldspaths ($R_2O \cdot Al_2O_3 \cdot 6SiO_2$, incluant feldspath sodique $Na_2O \cdot Al_2O_3 \cdot 6SiO_2$ et feldspath potassique $K_2O \cdot Al_2O_3 \cdot 6SiO_2$), la syénite néphélinique ($Na_2O \cdot Al_2O_3 \cdot 2SiO_2$), le spodumène ($Li_2O \cdot Al_2O_3 \cdot 2SiO_2$), la phonolite ($xR_2O \cdot yAl_2O_3 \cdot Fe2O3 \cdot zSiO_2$), le laitier de haut fourneau ($SiO_2 \cdot Al_2O_3 \cdot CaO \cdot S^{2-}$), le silicate de plomb ($PbO \cdot SiO_2$), l'alumine et le kaolin ($Al_2O_3 \cdot 2SiO_2 \cdot 2H_2O$).

**9.** Un procédé selon la revendication 1, dans lequel les matières du Groupe A sont essentiellement constituées par $B(OH)_3$, $B_2O_3$, $MgCO_3$, $MgO$, $CaCO_3$, $SrCO_3$, $SrO$, $Sr(NO_3)_2$, $BaCO_3$, $Ba(NO_3)_2$, $TiO_2$, $Ta_2O_5$ and $Y_2O_3$, les matières du Groupe B sont essentiellement constituées par $SiO_2$ et $Al_2O_3$, et les quantités des matières premières utilisées sont telles que le verre formé à partir de celles-ci présente une composition essentiellement constituée, en pourcentages molaires sur la base des oxydes, de

| | | | |
|---|---|---|---|
| $SiO_2$ | 64 à 70 | $MgO$ | 0 à 5 |
| $Al_2O_3$ | 9,5 à 14 | $CaO$ | 3 à 13 |
| $B_2O_3$ | 5 à 10 | $SrO$ | 0 à 5,5 |
| $TiO_2$ | 0 à 5 | $BaO$ | 2 à 7 |
| $Ta_2O_5$ | 0 à 5 | $MgO+CaO+SrO+BaO$ | 10 à 20 |

**10.** Un procédé selon la revendication 1, dans lequel les matières du Groupe A sont essentiellement constituées par $B(OH)_3$, $B_2O_3$, $MgCO_3$, $MgO$, $CaCO_3$, $SrO$, $SrCO_3$ et/ou $Sr(NO_3)_2$, les matières du Groupe B sont essentiellement constituées par $SiO_2$ et $Al_2O_3$, et les quantités des matières premières utilisées sont telles que le verre formé à partir de celles-ci présente une composition essentiellement constituée, en pourcentages molaires sur la base des oxydes, de

|       |         |     |       |
|-------|---------|-----|-------|
| SiO$_2$ | 65 à 75 | MgO | 0 à 3 |
| Al$_2$O$_3$ | 7 à 13 | CaO | 0 à 5 |
| B$_2$O$_3$ | 5 à 15 | SrO | 0 à 5 |

et est sensiblement dépourvue de BaO.

11. Un procédé selon la revendication 9 ou la revendication 10, dans lequel, au cours de l'opération (I), le mélange des matières du Groupe A est chauffé et maintenu aux environs de 1100 à 1200 °C pendant environ 1 à 2 heures à l'opération (ii) et est laissé dégazer de façon sensiblement complète.

12. Un procédé selon la revendication 1, dans lequel de la silice est utilisée comme matière première dans le Groupe B, en une proportion supérieure ou égale à 75 %, et de préférence supérieure ou égale à 80 %, par mole de la composition de verre obtenue.

# FIG. 1

| Glass sand SiO₂ ≥99% | Sada ash Na₂CO₃ | Limestone CaCO₃ | Feldspar R₂O ·Al₂O₃·6SiO2 | Other materials: K₂O, MgO, ZnO, BaO, PbO, fining, coloring, oxidizing |

Batch mixing ← Crushed cullet

Melting (1500°C) Fining (1550°C)

Conditioning (1300°C)

Forming (800-1100°C)

## FIG. 2

## FIG. 3